# EUROPEAN PATENT APPLICATION

(11) **EP 4 779 378 A1**
(43) Date of publication of application: **22.07.2026**
(21) Application number: 23952225.3
(22) Date of filing: 13.09.2023
(51) Int. Cl.: G02B 6/44, G02B 6/02

(54) **OPTICAL FIBER UNIT, OPTICAL FIBER CABLE, AND METHOD FOR MANUFACTURING OPTICAL FIBER UNIT**

(71) Applicant: Sumitomo Electric Industries, Ltd., Osaka-shi, Osaka 541-0041 (JP)
(72) Inventor: SATO Fumiaki, Osaka-shi, Osaka 541-0041 (JP); SATO Toshihisa, Osaka-shi, Osaka 541-0041 (JP); TSUCHIYA Kenta, Osaka-shi, Osaka 541-0041 (JP); SHIMODA Yuuki, Osaka-shi, Osaka 541-0041 (JP); TAKEDA Kentaro, Osaka-shi, Osaka 541-0041 (JP); YOSHIDA Jungo, Osaka-shi, Osaka 541-0041 (JP); YOSHIZAWA Fumikazu, Osaka-shi, Osaka 541-0041 (JP)
(74) Representative: Müller-Boré & Partner Patentanwälte PartG mbB
(86) International application number: PCT/JP2023/033384
(87) International publication number: WO 2025/057331

(57) **Abstract**

This optical fiber unit (10) comprises: a plurality of optical fiber core wires (11) having an outer diameter of 200 µm or less; an inner layer (12) that is in contact with the plurality of optical fiber core wires and covers the plurality of optical fiber core wires; and an outer layer (13) disposed outside the inner layer, wherein the plurality of optical fiber core wires (11) are integrated by being covered by the inner layer in a bundled state, and in a cross-sectional view of the optical fiber unit (10), the outer shape of the optical fiber unit is circular and the Young's modulus of the inner layer (12) is lower than the Young's modulus of the outer layer (13).

## Description

### TECHNICAL FIELD

The present disclosure relates to an optical fiber unit, an optical fiber cable, and a method for manufacturing an optical fiber unit.

### BACKGROUND ART

Patent Literature 1 discloses an optical fiber unit including an optical fiber ribbon including a plurality of optical fibers and a ribbon resin that integrates the plurality of optical fibers in a parallel state, and a coating resin that covers the optical fiber ribbon in an aggregate form.

### CITATION LIST

### PATENT LITERATURE

Patent Literature 1: WO2019/088256

### SUMMARY OF INVENTION

An optical fiber unit according to an aspect of the present disclosure is an optical fiber unit including:
a plurality of optical fibers having an outer diameter of 200 µm or less;
an inner layer in contact with the plurality of optical fibers and configured to cover the plurality of optical fibers; and
an outer layer provided outside the inner layer,
in which the plurality of optical fibers are integrated by being covered with the inner layer in a bundled state,
in which an outer shape of the optical fiber unit is a circular shape in a cross-sectional view of the optical fiber unit, and
in which a Young's modulus of the inner layer is lower than a Young's modulus of the outer layer.

### BRIEF DESCRIPTION OF DRAWINGS

[FIG. 1] FIG. 1 is a cross-sectional view of an optical fiber unit according to the present embodiment.
[FIG. 2] FIG. 2 is a schematic configuration diagram of a manufacturing apparatus for the optical fiber unit according to the present embodiment.
[FIG. 3] FIG. 3 is a flowchart illustrating a method for manufacturing the optical fiber unit according to the present embodiment.
[FIG. 4] FIG. 4 is a cross-sectional view of an optical fiber cable including six optical fiber units.
[FIG. 5] FIG. 5 is a cross-sectional view of an optical fiber cable including 24 optical fiber units.

### DESCRIPTION OF EMBODIMENTS

### [Technical Problem]

For example, in an optical fiber cable including an optical fiber ribbon including a plurality of optical fibers having an outer diameter of 200 µm or less, it may be difficult to collectively remove the coating of the optical fiber ribbon and to perform fusion splicing. For example, when an optical fiber cable is manufactured using an optical fiber in which the coating layer of the optical fiber is thinned, the optical fiber may be broken in a manufacturing process of the optical fiber cable. Further, when a plurality of optical fibers are unitized, there is also a need to improve lateral pressure resistance and external damage resistance of the optical fiber unit and fiber extraction performance of the optical fibers.

An object of the present disclosure is to provide an optical fiber unit, an optical fiber cable, and a method for manufacturing an optical fiber unit that can reduce breakage of an optical fiber having a small diameter while using the optical fiber, and that have good lateral pressure resistance and external damage resistance of the optical fiber unit and good fiber extraction performance of the optical fiber.

### [Description of Embodiments of Present Disclosure]

First, an embodiment of the present disclosure will be listed and described.
(1) An optical fiber unit according to an aspect of the present disclosure is an optical fiber unit including:
   a plurality of optical fibers having an outer diameter of 200 µm or less;
   an inner layer in contact with the plurality of optical fibers and configured to cover the plurality of optical fibers; and
   an outer layer provided outside the inner layer,
   in which the plurality of optical fibers are integrated by being covered with the inner layer in a bundled state,
   in which an outer shape of the optical fiber unit is a circular shape in a cross-sectional view of the optical fiber unit, and
   in which a Young's modulus of the inner layer is lower than a Young's modulus of the outer layer.

According to this configuration, the optical fiber unit having a circular outer shape in the cross-sectional view includes the plurality of optical fibers having an outer diameter of 200 µm or less, the inner layer covering the optical fibers, and the outer layer provided outside the inner layer. Since the optical fiber provided in the optical fiber unit is a small-diameter optical fiber having an outer diameter of 200 µm or less, the outer diameter of such an optical fiber unit is relatively small. Since the plurality of optical fibers are integrated by being covered with the inner layer in the bundled state, the optical fibers are less likely to be broken. Further, since the optical fiber unit has a two-layer structure of an inner layer and an outer layer, and the Young's modulus of the inner layer is lower than the Young's modulus of the outer layer, the lateral pressure resistance and the external damage resistance of the optical fiber unit having the configuration described above are high. Since the Young's modulus of the inner layer covering the optical fiber is lower than the Young's modulus of the outer layer, in the optical fiber unit having the configuration described above, the fiber extraction performance of the optical fiber is also good. Therefore, according to the optical fiber unit having the configuration described above, it is possible to reduce breakage of the optical fiber having a small diameter while using the optical fiber, and it is possible to improve the lateral pressure resistance and the external damage resistance of the optical fiber unit and the fiber extraction performance of the optical fiber.

(2) In the optical fiber unit according to (1) described above,
a release agent may be added to the inner layer.

According to this configuration, since the release agent is added to the inner layer, the fiber extraction performance of the optical fiber is further improved.

(3) In the optical fiber unit according to (1) or (2) described above,
an outer diameter of the optical fiber may be less than 180 µm.

According to this configuration, since such an optical fiber is an extremely thin optical fiber, the outer diameter of the optical fiber unit can be reduced.

(4) In the optical fiber unit according to (1) to (3) described above,
an optical fiber provided in the optical fiber may be a multicore fiber.

According to this configuration, the core density of the optical fiber unit can be increased.

(5) In the optical fiber unit according to any one of (1) to (4) described above,
the inner layer may have a Young's modulus of 300 MPa or less.

According to this configuration, the lateral pressure resistance can be improved.

(6) In the optical fiber unit according to any one of (1) to (5) described above,
the outer layer may be a colored layer to which a pigment is added.

According to this configuration, the identifiability of the optical fiber unit can be improved.

(7) An optical fiber cable according to an aspect of the present disclosure including:
a plurality of the optical fiber units according to any one of (1) to (6) described above; and
a cable sheath configured to cover a periphery of the plurality of optical fiber units.

According to this configuration, the outer diameter of such an optical fiber cable is relatively small. According to the configuration described above, it is possible to prevent the optical fiber from being broken when the periphery of the plurality of cable units is covered with the cable sheath to form a cable. Further, in such an optical fiber cable, the lateral pressure resistance and the external damage resistance of the optical fiber unit and the fiber extraction performance of the optical fiber are good.

(8) The optical fiber cable according to (7) described above, further including
a tensile strength member provided at a center of the optical fiber cable,
in which the plurality of optical fiber units are provided in a region formed between the tensile strength member and the cable sheath.

According to this configuration, since the plurality of optical fiber units are provided in the region formed between the tensile strength member and the cable sheath, it is possible to provide a configuration including a relatively large number of optical fiber cables while reducing the outer diameter. According to the optical fiber cable having the configuration described above, it is possible to increase the core density of the optical fiber cable while reducing the outer diameter.

(9) The optical fiber cable according to (7) described above, further including
a tensile strength member provided at a center of the optical fiber cable, and a water absorbent tape provided between the tensile strength member and the cable sheath,
in which the optical fiber unit may be provided in each of a first region formed between the tensile strength member and the water absorbent tape and a second region formed between the cable sheath and the water absorbent tape.

According to this configuration, since the optical fiber unit is provided in each of the first region and the second region, it is possible to further increase the core density of the optical fiber cable while relatively reducing the outer diameter.

(10) In the optical fiber cable according to any one of (7) to (9) described above,
a core density may be 10 cores/mm² or more, the core density being obtained by dividing the number of cores provided in the optical fiber by a cross-sectional area of the optical fiber cable.

According to this configuration, by using the optical fiber unit described above, it is possible to reduce breakage of the optical fiber while increasing the core density of the optical fiber cable.

(11) A method for manufacturing an optical fiber unit according to an aspect of the present disclosure including:
a step of concentrating a plurality of optical fibers having an outer diameter of 200 µm or less;
a step of passing the plurality of optical fibers through a die;
a step of covering the plurality of optical fibers with a first resin material and covering the first resin material with a second resin material in a state in which the plurality of optical fibers are bundled in the die; and
a step of forming an inner layer covering the plurality of optical fibers by irradiating the first resin material with ultraviolet rays and curing the first resin material, and forming an outer layer covering the inner layer by irradiating the second resin material with ultraviolet rays and curing the second resin material,
in which the plurality of optical fibers and the inner layer are in contact with each other,
in which an outer shape of the optical fiber unit in a cross-sectional view of the optical fiber unit is a circular shape, the optical fiber unit including the plurality of optical fibers, the inner layer, and the outer layer, and
in which a Young's modulus of the inner layer is lower than a Young's modulus of the outer layer.

According to this configuration, it is possible to manufacture an optical fiber unit including a plurality of optical fibers having an outer diameter of 200 µm or less, an inner layer covering the optical fibers, and an outer layer covering the inner layer, and having a circular outer shape in the cross-sectional view. Since the optical fiber provided in the optical fiber unit is a small-diameter optical fiber having an outer diameter of 200 µm or less, the outer diameter of such an optical fiber unit is relatively small. The plurality of optical fibers are covered with an inner layer having a circular outer shape in a cross-sectional view formed by curing a first resin material. That is, since the plurality of optical fibers are integrated by being covered with the inner layer having a circular outer shape in the cross-sectional view in the bundled state, the optical fibers are less likely to be broken. Further, since the fiber unit has a two-layer structure of an inner layer and an outer layer, and the Young's modulus of the inner layer is lower than the Young's modulus of the outer layer, the lateral pressure resistance and the external damage resistance of the optical fiber unit are high. In the fiber unit, since the Young's modulus of the inner layer covering the optical fiber is lower than the Young's modulus of the outer layer, the fiber extraction performance of the optical fiber is good. Therefore, according to the optical fiber unit having the configuration described above, it is possible to reduce breakage of the optical fiber having a small diameter while using the optical fiber, and it is possible to improve the lateral pressure resistance and the external damage resistance of the optical fiber unit and the fiber extraction performance of the optical fiber.

### [Advantageous Effects of Present Disclosure]

According to the present disclosure, it is possible to provide an optical fiber unit, an optical fiber cable, and a method for manufacturing the optical fiber unit that can reduce breakage of an optical fiber having a small diameter while using the optical fiber, and that have good lateral pressure resistance and external damage resistance of the optical fiber unit and good fiber extraction performance of the optical fiber.

### [Details of Embodiment of Present Disclosure]

Specific examples of an optical fiber unit, an optical fiber cable, and a method for manufacturing an optical fiber unit according to an embodiment of the present disclosure will be described below with reference to the drawings. The present disclosure is not limited to these examples, but is defined by the scope of the claims, and is intended to include all modifications within the meaning and scope equivalent to the scope of the claims.

### (Optical Fiber Unit 10)

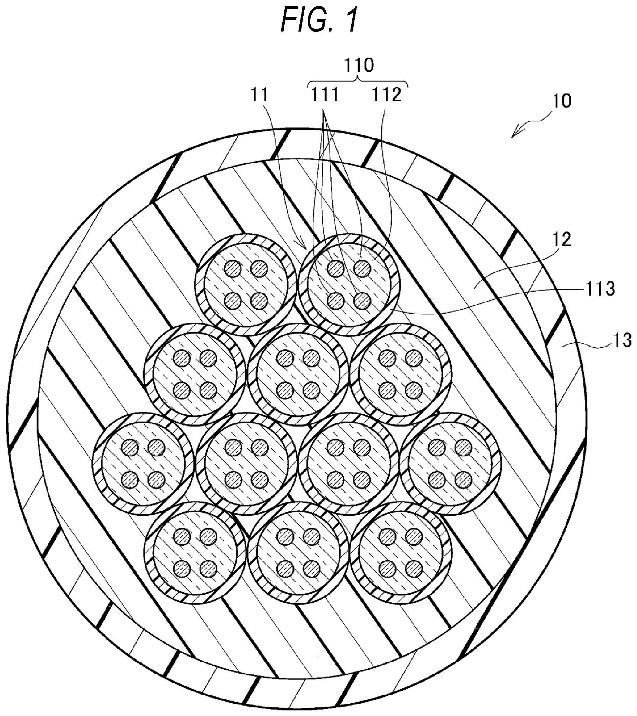

An optical fiber unit 10 according to the present embodiment will be described with reference to FIG. 1. FIG. 1 is a cross-sectional view of the optical fiber unit 10 according to the present embodiment. As illustrated in FIG. 1, the optical fiber unit 10 includes a plurality of optical fibers 11, an inner layer 12 covering the plurality of optical fibers 11, and an outer layer 13 provided outside the inner layer 12.

The outer diameter of the optical fiber 11 is 200 µm or less, and preferably less than 180 µm. The outer diameter of the optical fiber 11 is, for example, 160 µm. The optical fiber 11 includes an optical fiber 110 including four cores 111 and a cladding 112, and a protective coating 113 covering the optical fiber 110. Therefore, the optical fiber 110 provided in the optical fiber 11 is a multi core fiber (MCF). The optical fiber 110 is, for example, a glass fiber in which the core 111 and the cladding 112 are formed of quartz glass.

The core 111 is circular, in the cross section in the radial direction. The refractive index of the core 111 is higher than the refractive index of the cladding 112. The outer diameter of the core 111 is, for example, 5 µm or more and 10 µm or less.

The cladding 112 integrally surrounds the four cores 111. The outer diameter of the cladding 112 is larger than the outer diameter of the core 111. The outer diameter of the cladding 112 is, for example, 80 µm or more and 125 µm or less.

The protective coating 113 is formed of, for example, an acrylate resin. The protective coating 113 covers the periphery of the cladding 112.

In the present embodiment, the optical fiber unit 10 includes twelve optical fibers 11 as an example. The twelve optical fibers 11 are integrated by being covered with the inner layer 12 having a circular outer shape in a cross-sectional view in a bundled state. Therefore, the outer shape of the optical fiber unit 10 in a cross-sectional view is a circular shape. In the present description, the term "circular shape" includes not only a perfect circle but also a substantially circular shape and the like. The substantially circular shape is, for example, an ellipse or the like that is visually recognized to be close to a perfect circle. The outer diameter of the optical fiber unit 10 is, for example, 0.8 mm. The coating structure of the optical fiber unit 10 is a two-layer structure including the inner layer 12 and the outer layer 13.

The inner layer 12 covers the twelve optical fibers 11. The inner layer 12 is in contact with the twelve optical fibers 11. The inner layer 12 may be formed of, for example, a resin material such as a urethane acrylate resin. A release agent is added to the inner layer 12. The release agent is formed of, for example, silicone. The Young's modulus of the inner layer 12 is, for example, 300 MPa or less.

The outer layer 13 is provided outside the inner layer 12. The outer layer 13 can be formed of, for example, a resin material such as a urethane acrylate resin. The resin material contains a pigment of any color. Therefore, the outer layer 13 is a colored layer to which a pigment is added. The Young's modulus of the outer layer 13 is, for example, 1000 MPa. Therefore, the Young's modulus of the inner layer 12 is lower than the Young's modulus of the outer layer 13.

### (Manufacturing Apparatus 1 for Optical Fiber Unit 10)

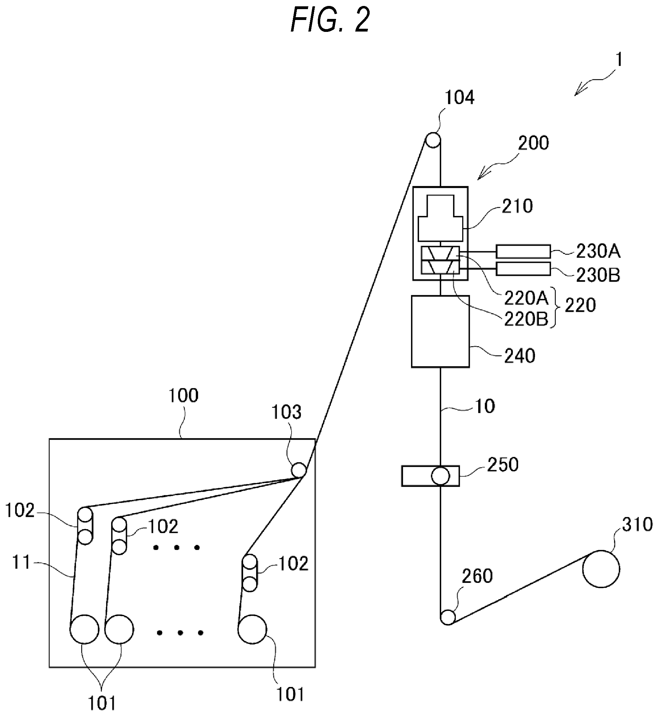

Next, a manufacturing apparatus 1 for the optical fiber unit 10 according to the present embodiment will be described with reference to FIG. 2. FIG. 2 is a schematic configuration diagram of the manufacturing apparatus 1 for the optical fiber unit 10 according to the present embodiment.

As illustrated in FIG. 2, the manufacturing apparatus 1 for the optical fiber unit 10 includes a supply device 100. In the supply device 100, twelve bobbins 101 corresponding to the number of fibers of the optical fiber unit 10, twelve dancer rollers 102, and a first guide roller 103 are provided. Each of the optical fibers 11 is wound around a respective one of the bobbins 101. Each of the optical fibers 11 is fed out from a respective one of the bobbins 101, tension thereof is adjusted by the dancer roller 102, and the optical fibers 11 are arranged on one arrangement surface when passing through the first guide roller 103. The optical fibers 11 are further concentrated by a direct upper guide roller 104 and sent to a resin coating device 200.

The resin coating device 200 includes a point 210 and a die 220. The optical fiber 11 is inserted into the resin coating device 200 and pulled with a predetermined tension. Accordingly, the inserted optical fibers 11 are guided by the point 210 to form a desired arrangement, and are sent to the die 220. In the present embodiment, when the twelve optical fibers 11 are guided by the point 210, the optical fibers 11 are bundled such that the cross-sectional outer shape is close to a circular shape, unlike a ribbon-shaped optical fiber ribbon that is usually used.

The die 220 includes a first portion 220A and a second portion 220B. The first portion 220A is provided at a position that is closer to the point 210 than is the second portion 220B. Therefore, the twelve optical fibers 11 are first sent to the first portion 220A and then to the second portion 220B. The first portion 220A applies the first resin material to the twelve optical fibers 11. The second portion 220B applies the second resin material to the twelve optical fibers 11 so as to cover the first resin material applied to the twelve optical fibers 11. The hole shapes of the outlets of the first portion 220A and the second portion 220B are a circular shape, and the resin material is applied around the twelve optical fibers 11 such that the cross-sectional outer shape is a circular shape. The first resin material and the second resin material are, for example, an ultraviolet curing resin. Examples of the ultraviolet curing resin include a urethane acrylate resin. A release agent such as silicone is added to the first resin material. The second resin material contains a pigment of any color. The first resin material is supplied from, for example, a first resin tank 230A. The second resin material is supplied from, for example, a second resin tank 230B. The first resin tank 230A and the second resin tank 230B are, for example, pressurizing resin tanks. The twelve optical fibers 11 covered with the first resin material and the second resin material are sent to the ultraviolet irradiation device 240.

In the ultraviolet irradiation device 240, the first resin material and the second resin material are irradiated with ultraviolet rays. Accordingly, the inner layer 12 (see FIG. 1) covering the twelve optical fibers 11 is formed, and the outer layer 13 (see FIG. 1) covering the inner layer 12 is formed. The twelve optical fibers 11 are integrated by being covered with the inner layer 12 in a bundled state. In this way, the optical fiber unit 10 including the twelve optical fibers 11, the inner layer 12 covering the twelve optical fibers 11, and the outer layer 13 provided outside the inner layer 12 is formed. The formed optical fiber unit 10 is sent to a marking device 250.

The marking device 250 is, for example, a dispenser or an inkjet printer. The dispenser is a device that discharges a liquid such as ink to an object. The marking device 250 performs, for example, strip-shaped marking on the optical fiber unit 10.

The marked optical fiber unit 10 is sent to a winding device 310 including a second guide roller 260 and a bobbin. In the winding device 310, the optical fiber unit 10 is wound around a bobbin via a guide. In this way, the optical fiber unit 10 is manufactured.

### (Method for Manufacturing Optical Fiber Unit 10)

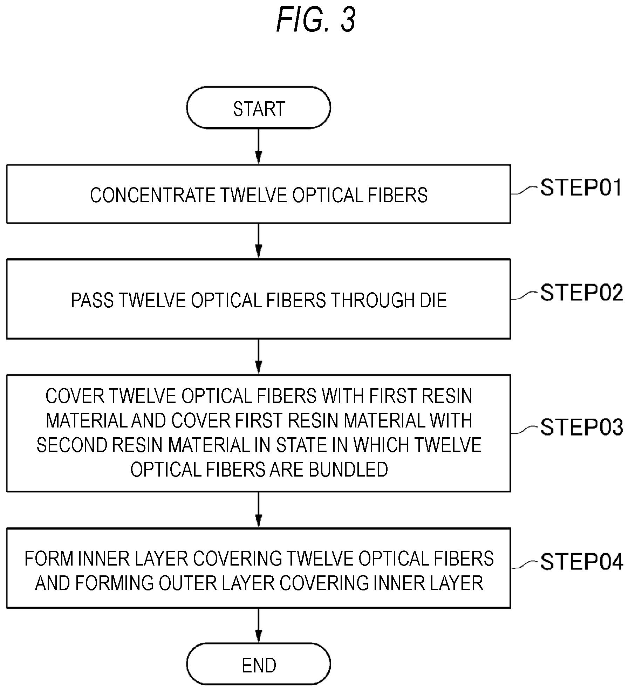

Next, a method for manufacturing the optical fiber unit 10 will be described with reference to FIG. 3. As illustrated in FIG. 3, for example, the twelve optical fibers 11 drawn out from the bobbins 101 are concentrated by the direct upper guide roller 104 (STEP01). The twelve concentrated optical fibers 11 are sent to the resin coating device 200.

The twelve optical fibers 11 sent to the resin coating device 200 are arranged in a desired arrangement at the point 210 and then passed through the die 220 (STEP02).

The twelve optical fibers 11 passed through the die 220 are covered with the first resin material and the first resin material is covered with the second resin material in a state in which the optical fibers 11 are bundled in the die 220 such that the cross-sectional outer shape is close to a circular shape (STEP03). The twelve optical fibers 11 covered with the first resin material and the second resin material are sent to the ultraviolet irradiation device 240.

By irradiating the first resin material and the second resin material with ultraviolet rays by the ultraviolet irradiation device 240, the inner layer 12 covering the twelve optical fibers 11 is formed, and the outer layer 13 covering the inner layer 12 is formed (STEP04). As a result, the optical fiber unit 10 is formed.

According to the optical fiber unit 10 as described above, since the optical fiber unit 10 includes only twelve optical fibers 11 having an outer diameter of 200 µm or less, the inner layer 12 covering the optical fibers 11, and the outer layer 13 provided outside the inner layer 12, the outer diameter of the optical fiber unit 10 is relatively small. Unlike the optical fiber ribbon, since the twelve optical fibers 11 are covered with the inner layer 12 in a state of being bundled such that the cross-sectional outer shape is close to a circular shape, the outer shape of the optical fiber unit 10 in a cross-sectional view is a circular shape. In such an optical fiber unit 10, since the entire circumference of the twelve optical fibers 11 is covered with the inner layer 12 having a relatively large coating thickness, breakage is less likely to occur in the twelve optical fibers 11 than in an optical fiber ribbon having a normally used tape shape. In this way, according to the optical fiber unit 10, it is possible to reduce breakage of the optical fiber 11 having a small diameter while using the optical fiber 11. Further, since the structure of the optical fiber unit 10 is a two-layer structure including the inner layer 12 and the outer layer 13, the external damage resistance of the optical fiber unit 10 is high. Since the Young's modulus of the inner layer 12 is lower than the Young's modulus of the outer layer 13, the lateral pressure resistance of the optical fiber unit 10 is also high. Further, since the Young's modulus of the inner layer 12 covering the optical fiber is lower than the Young's modulus of the outer layer 13, in the optical fiber unit 10, the fiber extraction performance of the optical fiber 11 is also good. Therefore, according to the optical fiber unit 10, it is possible to reduce breakage of the optical fiber 11 while reducing the outer diameter of the optical fiber unit 10, and it is possible to improve the lateral pressure resistance and external damage resistance of the optical fiber unit 10 and the fiber extraction performance of the optical fiber 11.

According to the optical fiber unit 10 as described above, the outer diameter of the optical fiber 11 is 160 µm. That is, the outer diameter of the optical fiber 11 is less than 180 µm. That is, since the optical fiber 11 provided in the optical fiber unit 10 is an optical fiber having an extremely small diameter, the outer diameter of the optical fiber unit 10 can be reduced.

According to the optical fiber unit 10 as described above, since the optical fiber 110 provided in the optical fiber 11 is a multicore fiber, the core density of the optical fiber unit 10 can be increased. The core density of the optical fiber unit 10 is the number of cores per unit area of the optical fiber unit 10.

According to the optical fiber unit 10 as described above, since the outer layer 13 is a colored layer to which a pigment is added, the identifiability of the optical fiber unit 10 can be improved.

### (Experiments Relating to Fiber Extraction Performance, Lateral Pressure Resistance, and External Damage Resistance)

The inventors evaluated the optical fiber units according to Experimental Examples 1 to 8 in Table 1 on the fiber extraction performance, the lateral pressure resistance, and the external damage resistance. The evaluation index related to the fiber extraction performance is whether the optical fiber inside the optical fiber unit can be extracted by hand without using a tool such as a nipper. When the optical fiber inside the optical fiber unit was taken out by hand, the fiber extraction performance was evaluated as good (evaluated as A). When a part of the optical fibers were taken out using a tool such as a nipper, the fiber extraction performance was evaluated as slightly good (evaluated as B). When the optical fiber inside the optical fiber unit was not taken out even using a tool such as a nipper, the fiber extraction performance was evaluated as poor (evaluated as C). The evaluation index related to the lateral pressure resistance is the degree of loss increase when the lateral pressure of 500 N is applied to the optical fiber unit with a metal flat plate of 100 mm. The lateral pressure resistance was evaluated as good (evaluated as A) when the loss increase at the time of application of 500 N was less than 0.1 dB. When the loss increase at the time of application of 500 N was 0.1 dB or more and less than 0.3 dB, the lateral pressure resistance was evaluated as slightly good (evaluated as B). When the loss increase at the time of application of 500 N was 0.3 dB or more, the lateral pressure resistance was evaluated as poor (evaluated as C). The evaluation index related to the external damage resistance is whether the optical fiber is broken in the process of manufacturing the optical fiber unit. In the process of manufacturing the optical fiber unit, the external damage resistance was evaluated as good (evaluated as A) when the optical fiber was not broken. In the process of manufacturing the optical fiber unit, the external damage resistance was evaluated as poor (evaluated as C) when the optical fiber was broken. The optical fiber units according to Experimental Examples 1 to 4 are single-layer optical fiber units. The optical fiber units 10 according to Experimental Examples 5 to 8 are two-layer optical fiber units.

**[Table 1]**

| | Experimental example 1 | Experimental example 2 | Experimental example 3 | Experimental example 4 | Experimental example 5 | Experimental example 6 | Experimental example 7 | Experimental example 8 |
|---|---|---|---|---|---|---|---|---|
| Young's modulus (MPa) | 300 | 300 | 1000 | 50 | Inner layer: 50 | Inner layer: 300 | Inner layer: 50 | Inner 500 layer: |
| | | | | | Outer layer: 1000 | Outer layer: 1000 | Outer layer: 1000 | Outer layer: 1000 |
| Release agent | Not present | Present | Present | Present | Present | Present | Not present | Present |
| Fiber extraction performance | Evaluated as B | Evaluated as A | Evaluated as C | Evaluated as A | Evaluated as A | Evaluated as A | Evaluated as B | Evaluated as B |
| Lateral pressure resistance | Evaluated as C | Evaluated as C | Evaluated as A | Evaluated as C | Evaluated as A | Evaluated as A | Evaluated as A | Evaluated as A |
| External damage resistance | Evaluated as A | Evaluated as A | Evaluated as A | Evaluated as C | Evaluated as A | Evaluated as A | Evaluated as A | Evaluated as A |

As a result of conducting an experiment on the fiber extraction performance described above for the optical fiber unit according to Experimental Example 1, a part of the optical fibers were extracted using a tool such as a nipper, and thus the fiber extraction performance was evaluated as slightly good (evaluated as B). As a result of conducting the experiment on the lateral pressure resistance described above for the optical fiber unit according to Experimental Example 1, the loss increase when 500 N was applied was 0.3 dB or more, and thus the lateral pressure resistance was evaluated as poor (evaluated as C). As a result of conducting the experiment on the external damage resistance described above for the optical fiber unit according to Experimental Example 1, the optical fiber was not broken in the process of manufacturing the optical fiber unit, and thus the external damage resistance was evaluated as good (evaluated as A).

As a result of conducting an experiment on the fiber extraction performance described above for the optical fiber unit according to Experimental Example 2, the optical fiber inside the optical fiber unit was extracted by hand, and thus the fiber extraction performance was evaluated as good (evaluated as A). As a result of conducting the experiment on the lateral pressure resistance described above for the optical fiber unit according to Experimental Example 2, the loss increase when 500 N was applied was 0.3 dB or more, and thus the lateral pressure resistance was evaluated as poor (evaluated as C). As a result of conducting the experiment on the external damage resistance described above for the optical fiber unit according to Experimental Example 2, the optical fiber was not broken in the process of manufacturing the optical fiber unit, and thus the external damage resistance was evaluated as good (evaluated as A).

As a result of conducting an experiment on the fiber extraction performance described above for the optical fiber unit according to Experimental Example 3, the optical fiber inside the optical fiber unit was not extracted even using a tool such as a nipper, and thus the fiber extraction performance was evaluated as poor (evaluated as C). As a result of conducting the experiment on the lateral pressure resistance described above for the optical fiber unit according to Experimental Example 3, the loss increase when 500 N was applied was less than 0.1 dB, and thus the lateral pressure resistance was evaluated as good (evaluated as A). As a result of conducting the experiment on the external damage resistance described above for the optical fiber unit according to Experimental Example 3, the optical fiber was not broken in the process of manufacturing the optical fiber unit, and thus the external damage resistance was evaluated as good (evaluated as A).

As a result of conducting an experiment on the fiber extraction performance described above for the optical fiber unit according to Experimental Example 4, the optical fiber inside the optical fiber unit was extracted by hand, and thus the fiber extraction performance was evaluated as good (evaluated as A). As a result of conducting the experiment on the lateral pressure resistance described above for the optical fiber unit according to Experimental Example 4, the loss increase when 500 N was applied was 0.3 dB or more, and thus the lateral pressure resistance was evaluated as poor (evaluated as C). As a result of conducting the experiment on the external damage resistance described above for the optical fiber unit according to Experimental Example 4, the optical fiber was broken in the process of manufacturing the optical fiber unit, and thus the external damage resistance was evaluated as poor (evaluated as C).

As a result of conducting an experiment on the fiber extraction performance described above for the optical fiber unit 10 according to Experimental Example 5, the optical fiber 11 inside the optical fiber unit 10 was extracted by hand, and thus the fiber extraction performance was evaluated as good (evaluated as A). As a result of conducting the experiment on the lateral pressure resistance described above for the optical fiber unit 10 according to Experimental Example 5, the loss increase when 500 N was applied was less than 0.1 dB, and thus the lateral pressure resistance was evaluated as good (evaluated as A). As a result of conducting the experiment on the external damage resistance described above for the optical fiber unit 10 according to Experimental Example 5, the optical fiber 11 was not broken in the process of manufacturing the optical fiber unit 10, and thus the external damage resistance was evaluated as good (evaluated as A).

As a result of conducting an experiment on the fiber extraction performance described above for the optical fiber unit 10 according to Experimental Example 6, the optical fiber 11 inside the optical fiber unit 10 was extracted by hand, and thus the fiber extraction performance was evaluated as good (evaluated as A). As a result of conducting the experiment on the lateral pressure resistance described above for the optical fiber unit 10 according to Experimental Example 6, the loss increase when 500 N was applied was less than 0.1 dB, and thus the lateral pressure resistance was evaluated as good (evaluated as A). As a result of conducting the experiment on the external damage resistance described above for the optical fiber unit 10 according to Experimental Example 6, the optical fiber 11 was not broken in the process of manufacturing the optical fiber unit 10, and thus the external damage resistance was evaluated as good (evaluated as A).

As a result of conducting an experiment on the fiber extraction performance described above for the optical fiber unit according to Experimental Example 7, a part of the optical fibers were extracted using a tool such as a nipper, and thus the fiber extraction performance was evaluated as slightly good (evaluated as B). As a result of conducting the experiment on the lateral pressure resistance described above for the optical fiber unit according to Experimental Example 7, the loss increase when 500 N was applied was less than 0.1 dB, and thus the lateral pressure resistance was evaluated as good (evaluated as A). As a result of conducting the experiment on the external damage resistance described above for the optical fiber unit according to Experimental Example 7, the optical fiber was not broken in the process of manufacturing the optical fiber unit, and thus the external damage resistance was evaluated as good (evaluated as A).

As a result of conducting an experiment on the fiber extraction performance described above for the optical fiber unit according to Experimental Example 8, a part of the optical fibers were extracted using a tool such as a nipper, and thus the fiber extraction performance was evaluated as slightly good (evaluated as B). As a result of conducting the experiment on the lateral pressure resistance described above for the optical fiber unit according to Experimental Example 8, the loss increase when 500 N was applied was less than 0.1 dB, and thus the lateral pressure resistance was evaluated as good (evaluated as A). As a result of conducting the experiment on the external damage resistance described above for the optical fiber unit according to Experimental Example 8, the optical fiber was not broken in the process of manufacturing the optical fiber unit, and thus the external damage resistance was evaluated as good (evaluated as A).

In the single-layer optical fiber units according to Experimental Examples 1 to 4, at least one of the fiber extraction performance, the lateral pressure resistance, and the external damage resistance was evaluated as poor (evaluated as C). Here, based on the comparison between the optical fiber unit according to Experimental Example 3 and the optical fiber unit according to Experimental Example 4, it was found that, in the single-layer optical fiber unit, when the Young's modulus of the layer covering the optical fiber is high, the lateral pressure resistance and the external damage resistance are high, but on the other hand, the fiber extraction performance is low. On the other hand, in the two-layer optical fiber units 10 according to Experimental Examples 5 and 6, all of the fiber extraction performance, the lateral pressure resistance, and the external damage resistance were evaluated as good (evaluated as A). In the two-layer optical fiber units 10 according to Experimental Examples 7 and 8, the fiber extraction performance was evaluated as slightly good (evaluated as B), and the lateral pressure resistance and the external damage resistance were evaluated as good (evaluated as A). This is because, in the two-layer optical fiber unit 10, the Young's modulus of the inner layer 12 and the Young's modulus of the outer layer 13 can be made different from each other, and thus, for example, by making the Young's modulus of the inner layer 12 low while making the Young's modulus of the outer layer 13 high, the lateral pressure resistance and the external damage resistance can be improved, and the fiber extraction performance can also be improved. Therefore, when it is desired to improve all of the fiber extraction performance, the lateral pressure resistance, and the external damage resistance, the two-layer optical fiber unit 10 is more suitable than the single-layer optical fiber unit.

As a result of comparing the optical fiber unit 10 according to Experimental Example 5 and the optical fiber unit according to Experimental Example 7, it was found that the fiber extraction performance can be further improved by adding a release agent to the inner layer 12. Based on the comparison between the optical fiber units according to Experimental Examples 5 and 6 and the optical fiber unit according to Experimental Example 8, it was also found that the fiber extraction performance can be further improved by setting the Young's modulus of the inner layer 12 to 300 MPa or less.

According to the optical fiber unit 10 as described above, since the Young's modulus of the inner layer 12 is 300 MPa or less, the lateral pressure resistance is high.

### (Optical Fiber Cable 20 Produced Using Optical Fiber Unit 10)

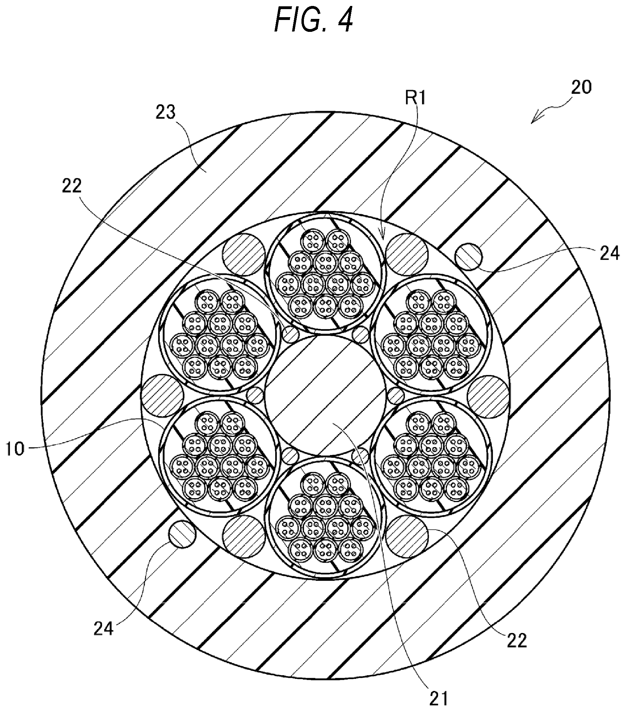

Next, an optical fiber cable 20 produced using the optical fiber unit 10 will be described with reference to FIG. 4. As illustrated in FIG. 4, the optical fiber cable 20 includes six optical fiber units 10, tensile strength members 21, water absorbent fibers 22, a cable sheath 23, and tear strings 24. Therefore, the optical fiber cable 20 is a 72-core optical fiber cable. The outer diameter of the optical fiber cable 20 is, for example, 3.6 mm. The core density (the number of cores per unit area) obtained by dividing the number of cores 111 provided in the optical fiber 11 by the cross-sectional area of the optical fiber cable 20 is 10 cores/mm² or more.

The optical fiber cable 20 is produced by, for example, annularly arranging the six optical fiber units 10 around the tensile strength member 21 with the tensile strength member 21 as the center, and extrusion-coating the cable sheath 23 so as to cover the six optical fiber units 10. Therefore, the six optical fiber units 10 are provided outside the tensile strength member 21 and are covered with the cable sheath 23. That is, the six optical fiber units 10 are provided in a region R1 formed between the tensile strength member 21 and the cable sheath 23.

The tensile strength member 21 is formed of, for example, fiber reinforced plastics (FRP). Examples of the fiber reinforced plastics include glass fiber reinforced plastics (GFRP) and aramid fiber reinforced plastics (AFRP). The tensile strength member 21 has a substantially circular shape in a cross-sectional view of the optical fiber cable 20. The outer diameter of the tensile strength member 21 is, for example, 0.7 mm or more and 0.8 mm or less. The tensile strength member 21 is located substantially at the center of the optical fiber cable 20 in the cross-sectional view of the optical fiber cable 20.

The water absorbent fiber 22 is, for example, a fiber obtained by applying a water absorbent powder to a plastic fiber or a fiber in which water absorbent properties are maintained. The water absorbent fiber 22 is, for example, a linear member having an outer diameter of approximately 0.1 mm in a dry state. The water absorbent fiber 22 is provided along the longitudinal direction of the optical fiber cable 20. The water absorbent fiber 22 is provided between the tensile strength member 21 and the cable sheath 23.

The cable sheath 23 is formed of a resin material such as a polyethylene resin or a flame-retardant polyethylene resin. The Young's modulus of the cable sheath 23 at 23°C is, for example, 1500 MPa or more, which is relatively high. The cable sheath 23 preferably has low shrinkage, low friction, and flame retardance. Numbers, characters, and the like of the identification display may be printed on the cable sheath 23 by a laser printer or the like.

The tear strings 24 are for tearing the cable sheath 23, and are embedded in the cable sheath 23 along the longitudinal direction of the optical fiber cable 20. In the present embodiment, two tear strings 24 are provided. The two tear strings 24 are provided at positions facing each other with reference to the tensile strength member 21 in the cross-sectional view of the optical fiber cable 20. By pulling out the tear strings 24, the cable sheath 23 is torn in the longitudinal direction of the optical fiber cable 20, and the optical fiber unit 10 can be taken out. The tear strings 24 are formed of, for example, a plastic material (for example, polyester) resistant to tension.

According to the optical fiber cable 20 as described above, since the optical fiber cable 20 is produced using the optical fiber unit 10 having a relatively small outer diameter, the outer diameter of the optical fiber cable 20 is relatively small. According to the optical fiber cable 20 as described above, it is possible to prevent the optical fiber 11 from being broken when the periphery of the six optical fiber units 10 is covered with the cable sheath 23 to form a cable. Further, in the optical fiber cable 20, the lateral pressure resistance and the external damage resistance of the optical fiber unit 10 provided in the optical fiber cable 20 and the fiber extraction performance of the optical fiber 11 are good.

According to the optical fiber cable 20 as described above, the six optical fiber units 10 are provided in the region R1 formed between the tensile strength member 21 and the cable sheath 23. Therefore, according to the optical fiber cable 20, it is possible to provide a configuration including a relatively large number of optical fiber units 10 while reducing the outer diameter. That is, according to the optical fiber cable 20, it is possible to increase the core density of the optical fiber cable 20 while reducing the outer diameter.

According to the optical fiber cable 20 as described above, the core density is 10 cores/mm² or more, and it is possible to reduce breakage of the optical fiber 11 while increasing the core density of the optical fiber cable 20.

### (Optical Fiber Cable 20A Produced Using Optical Fiber Unit 10)

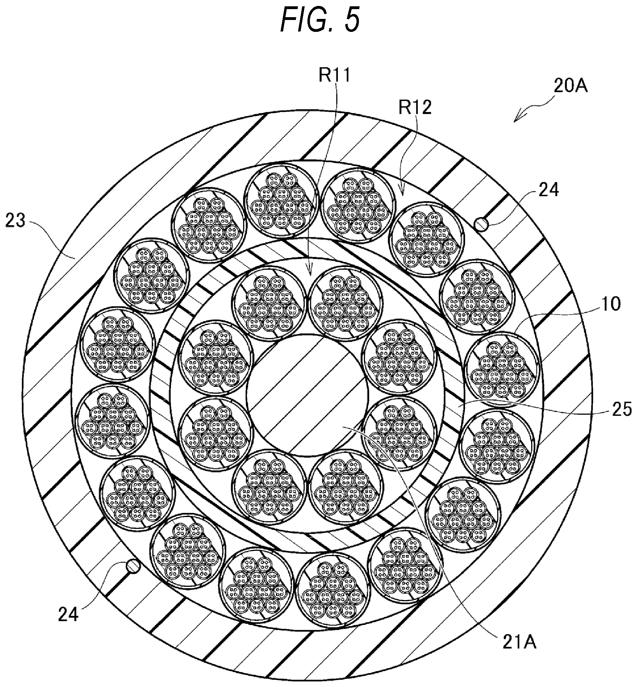

Next, an optical fiber cable 20A produced using the optical fiber unit 10 will be described with reference to FIG. 5. However, in the description of the optical fiber cable 20A, the same components as those of the optical fiber cable 20 will be described using the same reference signs, and the description of overlapping portions will be omitted as appropriate. As illustrated in FIG. 5, the optical fiber cable 20A includes 24 optical fiber units 10, a tensile strength member 21A, the cable sheath 23, the tear string 24, and a water absorbent tape 25. Therefore, the optical fiber cable 20A is a 288-core optical fiber cable. The outer diameter of the optical fiber cable 20A is, for example, 6.0 mm. In the optical fiber cable 20A, the core density is also 10 cores/mm² or more.

The optical fiber cable 20A has a structure in which the optical fiber unit 10 is accommodated in two layers. For example, a one-layer portion is produced by annularly arranging eight optical fiber units 10 around the tensile strength member 21A with the tensile strength member 21A as the center, and wrapping the water absorbent tape 25 so as to cover the eight optical fiber units 10. A two-layer portion is produced by annularly arranging the remaining 16 optical fiber units 10 so as to cover the water absorbent tape 25 and extrusion-coating the cable sheath 23 so as to cover the 16 optical fiber units 10. Therefore, eight optical fiber units 10 are provided in a first region R11 formed between the tensile strength member 21A and the water absorbent tape 25, and 16 optical fiber units 10 are provided in a second region R12 formed between the cable sheath 23 and the water absorbent tape 25.

The tensile strength member 21A may have the same configuration as the tensile strength member 21 of the optical fiber cable 20. However, the outer diameter of the tensile strength member 21A is, for example, 1.2 mm or more and 1.3 mm or less. The tensile strength member 21A is located substantially at the center of the optical fiber cable 20A in a cross-sectional view of the optical fiber cable 20A.

The water absorbent tape 25 is provided between the tensile strength member 21A and the cable sheath 23. The water absorbent tape 25 is wrapped around the eight optical fiber units 10 provided in the first region R11 formed between the tensile strength member 21A and the water absorbent tape 25, for example, longitudinally or laterally. The water absorbent tape 25 is made by performing water absorption processing by applying a water absorbent powder to a base cloth made of polyester, for example.

The optical fiber cable 20A as described above also exhibits the same effects as those of the optical fiber unit 10 and the optical fiber cable 20.

According to the optical fiber cable 20A as described above, since the optical fiber unit 10 is provided in each of the first region R11 and the second region R12, it is possible to further increase the core density of the optical fiber cable 20A while relatively reducing the outer diameter.

Although the present disclosure has been described in detail with reference to the specific embodiment, it is apparent to those skilled in the art that various changes and modifications can be made without departing from the spirit and scope of the present disclosure. In addition, the number, positions, shapes, and the like of the constituent members described above are not limited to those in the embodiment described above, and can be changed to the numbers, positions, shapes, and the like suitable for carrying out the present disclosure.

In the embodiment described above, the optical fiber unit 10 includes twelve optical fibers 11. However, the number of optical fibers 11 provided in the optical fiber unit 10 is not limited to twelve, and may be two or more.

In the embodiment described above, the optical fiber cable 20 includes six optical fiber units 10, and the optical fiber cable 20A includes 24 optical fiber units 10. However, the number of optical fiber units 10 provided in the optical fiber cables 20 and 20A may be two or more, and is not limited thereto.

In the embodiment described above, the optical fiber cable 20 includes the six optical fiber units 10, the tensile strength member 21, the water absorbent fiber 22, the cable sheath 23, and the tear string 24, but the present disclosure is not limited thereto. The optical fiber cable 20 may not include, for example, the water absorbent fiber 22 and the tear string 24. The optical fiber cable 20A includes 24 optical fiber units 10, the tensile strength member 21A, the cable sheath 23, the tear string 24, and the water absorbent tape 25, but the present disclosure is not limited thereto. The optical fiber cable 20A may not include the tear string 24, for example.

In the embodiment described above, the optical fiber 11 includes four cores 111. However, the number of cores 111 provided in the optical fiber 11 is not limited to four. The optical fiber 11 may include one core 111. That is, the optical fiber 110 provided in the optical fiber 11 may be a single-core fiber.

In the embodiment described above, the strip-shaped marking is performed on the optical fiber unit 10 by the marking device 250. Alternatively, another marking may be performed on the optical fiber unit 10. The marking may not be performed on the optical fiber unit 10. The marking device 250 may be omitted.

### REFERENCE SIGNS LIST

1: manufacturing apparatus
10: optical fiber unit
11: optical fiber
12: inner layer
13: outer layer
20, 20A: optical fiber cable
21, 21A: tensile strength member
22: water absorbent fiber
23: cable sheath
24: tear string
25: water absorbent tape
100: supply device
101: bobbin
102: dancer roller
103: first guide roller
104: direct upper guide roller
110: optical fiber
111: core
112: cladding
113: protective coating
200: resin coating device
210: point
220: die
220A: first portion
220B: second portion
230A: first resin tank
230B: second resin tank
240: ultraviolet irradiation device
250: marking device
260: second guide roller
310: winding device
R1: region formed between tensile strength member and cable sheath
R11: first region
R12: second region

## Claims

1. An optical fiber unit comprising:
a plurality of optical fibers having an outer diameter of 200 µm or less;
an inner layer in contact with the plurality of optical fibers and configured to cover the plurality of optical fibers; and
an outer layer provided outside the inner layer,
wherein the plurality of optical fibers are integrated by being covered with the inner layer in a bundled state,
wherein an outer shape of the optical fiber unit is a circular shape in a cross-sectional view of the optical fiber unit, and
wherein a Young's modulus of the inner layer is lower than a Young's modulus of the outer layer.

2. The optical fiber unit according to claim 1,
wherein a release agent is added to the inner layer.

3. The optical fiber unit according to claim 1 or 2,
wherein an outer diameter of the optical fiber is less than 180 µm.

4. The optical fiber unit according to claim 1 or 2,
wherein an optical fiber provided in the optical fiber is a multicore fiber.

5. The optical fiber unit according to claim 1 or 2,
wherein the inner layer has a Young's modulus of 300 MPa or less.

6. The optical fiber unit according to claim 1 or 2,
wherein the outer layer is a colored layer to which a pigment is added.

7. An optical fiber cable comprising:
a plurality of the optical fiber units according to claim 1 or 2; and
a cable sheath configured to cover a periphery of the plurality of optical fiber units.

8. The optical fiber cable according to claim 7, further comprising
a tensile strength member provided at a center of the optical fiber cable,
wherein the plurality of optical fiber units are provided in a region formed between the tensile strength member and the cable sheath.

9. The optical fiber cable according to claim 7, further comprising:
a tensile strength member provided at a center of the optical fiber cable; and
a water absorbent tape provided between the tensile strength member and the cable sheath,
wherein the optical fiber unit is provided in each of a first region formed between the tensile strength member and the water absorbent tape, and a second region formed between the cable sheath and the water absorbent tape.

10. The optical fiber cable according to claim 7,
wherein a core density is 10 cores/mm² or more, the core density being obtained by dividing the number of cores provided in the optical fiber by a cross-sectional area of the optical fiber cable.

11. A method for manufacturing an optical fiber unit, the method comprising:
a step of concentrating a plurality of optical fibers having an outer diameter of 200 µm or less;
a step of passing the plurality of optical fibers through a die;
a step of covering the plurality of optical fibers with a first resin material and covering the first resin material with a second resin material in a state in which the plurality of optical fibers are bundled in the die; and
a step of forming an inner layer covering the plurality of optical fibers by irradiating the first resin material with ultraviolet rays and curing the first resin material, and forming an outer layer covering the inner layer by irradiating the second resin material with ultraviolet rays and curing the second resin material,
wherein the plurality of optical fibers and the inner layer are in contact with each other,
wherein an outer shape of the optical fiber unit in a cross-sectional view of the optical fiber unit is a circular shape, the optical fiber unit including the plurality of optical fibers, the inner layer, and the outer layer, and
wherein a Young's modulus of the inner layer is lower than a Young's modulus of the outer layer.
